# EUROPEAN PATENT APPLICATION

(11) **EP 3 206 204 A1**
(43) Date of publication of application: **16.08.2017**
(21) Application number: 16154826.8
(22) Date of filing: 09.02.2016
(51) Int. Cl.: G10L 15/32, H04B 3/23

(54) **SYSTEM FOR PROCESSING AUDIO**

(71) Applicant: NXP B.V., 5656 AG Eindhoven (NL)
(72) Inventor: FORLIN, Marco, 5656 AG Eindhoven (NL); LANEAU, Johan, 5656 AG Eindhoven (NL); DE BUYS, Frans Victor Felix, 5656 AG Eindhoven (NL); GOYENS, Rob, 5656 AG Eindhoven (NL)
(74) Representative: Krott, Michel

(57) **Abstract**

According to a first aspect of the present disclosure, a system for processing audio is provided, comprising: a main speech recognizer; an echo speech recognizer; a filtering unit being configured to filter an output of the main speech recognizer using an output of the echo speech recognizer. According to a second aspect of the present disclosure, a corresponding method for processing audio is conceived. According to a third aspect of the present disclosure, a corresponding computer program product is provided. According to a fourth aspect of the present disclosure, a corresponding apparatus for processing audio is provided.

## Description

### FIELD

The present disclosure relates to a system for processing audio. Furthermore, the present disclosure relates to a corresponding method for processing audio and to a corresponding computer program product.

### BACKGROUND

Today, many devices contain speech-controlled or speech-assisted applications. For example, a smart phone may accept spoken commands for particular applications.

### SUMMARY

According to a first aspect of the present disclosure, a system for processing audio is provided, comprising: a main speech recognizer; an echo speech recognizer; a filtering unit being configured to filter an output of the main speech recognizer using an output of the echo speech recognizer.

In one or more embodiments, the main speech recognizer is configured to receive an audio input signal from a microphone.

In one or more embodiments, the system further comprises an acoustic echo canceller that is configured to suppress at least a part of the echo present in the audio input signal before said audio input signal is received by the main speech recognizer.

In one or more embodiments, the echo speech recognizer is configured to receive echo reference input data from an audio playback unit.

In one or more embodiments, the echo reference input data corresponds to a loudspeaker signal.

In one or more embodiments, the system further comprises a delaying unit that is configured to delay the echo reference input data before said data are received by the echo speech recognizer.

In one or more embodiments, the filtering unit is configured to filter the output of the main speech recognizer by comparing it with the output of the echo speech recognizer and by deleting or suppressing words which are substantially the same in both outputs.

In one or more embodiments, said words comprise keywords that are configured to cause a device and/or an application to execute one or more functions.

In one or more embodiments, the echo speech recognizer is configured to be activated conditionally.

In one or more embodiments, the echo speech recognizer is configured to be activated in dependence on the output of an acoustic echo canceller or on the output of an echo activity detector.

In one or more embodiments, hysteresis is added to the output of the acoustic echo canceller or the output of the echo activity detector.

In one or more embodiments, the system is embedded in at least one of: a mobile device, a wearable device, a home appliance, a vehicle component.

According to a second aspect of the present disclosure, a method for processing audio is conceived, wherein a filtering unit filters an output of a main speech recognizer using an output of an echo speech recognizer.

According to a third aspect of the present disclosure, a computer program product is provided that comprises instructions which, when executed by a processing unit, cause said processing unit to carry out or control a method of the kind set forth.

According to a fourth aspect of the present disclosure, an apparatus for processing audio is provided, comprising: a main speech recognizer circuit; an echo speech recognizer circuit; a filtering circuit being configured to filter an output of the main speech recognizer circuit using an output of the echo speech recognizer circuit.

### DESCRIPTION OF DRAWINGS

Embodiments will be described in more detail with reference to the appended drawings, in which:
Fig. 1 shows an illustrative embodiment of an audio processing system;
Fig. 2 shows an illustrative embodiment of a robust automatic speech recognizer;
Fig. 3 shows a further illustrative embodiment of a robust automatic speech recognizer.

### DESCRIPTION OF EMBODIMENTS

Today, many devices contain speech-controlled or speech-assisted applications. For example, a smart phone may accept spoken commands for particular applications. It may happen, however, that these devices erroneously respond to other sound, in particular to echo resulting from audio content played by the devices. It may be desirable to avoid such problems.

As mentioned above, according to a first aspect of the present disclosure, a system for processing audio is provided. The system comprises a main speech recognizer and an echo speech recognizer. Furthermore, the system comprises a filtering unit that is configured to filter an output of the main speech recognizer using an output of the echo speech recognizer. In this way, echo speech, which may for example be produced by an audio playback unit of a mobile device, may be distinguished from, and subsequently filtered from, end-user speech. This, in turn, may enable a higher accuracy of speech-controlled or speech-assisted functions, for example in the sense that the echo speech is not erroneously used as a command for activating a function.

When audio content is played on a device, the resulting echo present on the microphones of said device may negatively impact the recognition of the speech (e.g., spoken commands) from the user. More specifically, the echo may reduce the ability of the speech recognizer to detect the speech of the end-user reliably. For this reason an Acoustic Echo Canceller (AEC), which is typically implemented in software, is often used as a preprocessor to the speech recognizer in order to suppress the echo at its input. However, even if such an AEC is used, residual echo may disturb the speech recognition process. Furthermore, if a signal played back over the device speaker contains words, they can be wrongly detected as end-user speech, which may lead to unexpected results. Furthermore, it may not be possible to completely remove the echo while leaving the near-end signal (i.e., the end-user speech) intact in case of a low speech-to-echo (SER) ratio, due to high speaker-microphone coupling and distant near-end speech. This may lead to a trade-off between echo suppression and speech preservation. While in a communication use-case good echo suppression is often chosen at the expense of double-talk continuity, in a speech recognition case the speech recognizer can still function well with some residual echo. Since the preservation of the features of importance to the recognizer is vital, this may lead to a different trade-off where the presence of residual echoes at the input of the speech recognizer is common.

For instance, when videos, music, or text-to-speech (TTS) are played on the device, not all of the resulting echo signal is removed by the AEC, and this residual echo can contain speech and cause false detections by the speech recognizer of the end-user speech, even though the echo speech has degraded. Thus, the following dilemma may present itself: completely removing the echo will impact the effectiveness of the speech recognition, while tuning the echo suppression so that it improves the speech recognition effectiveness may increase the risk that residual echo triggers an unexpected behavior of the device.

An illustrative problem with TTS played by a phone is the following:
- The phone receives a call;
- Text to speech is used to spell the word "Accept the call";
- Echo suppression doesn't completely suppress the word "accept";
- The speech recognizer detects the word "accept" as a valid trigger, and answers the call automatically.

An illustrative problem with video played by a phone is the following:
- The phone is playing a video;
- The video contains somebody saying the word "next";
- Echo suppression doesn't completely suppress the word "next";
- The speech recognizer detects the word "next" as a valid trigger, and skips to the next video automatically.

This unexpected behavior is clearly undesirable. Thus, there may be a need for a solution that provides an optimal input to the speech recognizer, while making it more robust to the content being played on the device. The presently disclosed system and method may be used in conjunction with an AEC that suppresses a part of the echo speech. Accordingly, in one or more embodiments, the system further comprises an acoustic echo canceller that is configured to suppress at least a part of the echo present in an audio input signal received from a microphone, before said audio input signal is received by the main speech recognizer. Thereby, hugely disturbing echo may be removed, for example. However, the presently disclosed and method may equally well be applied in devices without an AEC. The presently disclosed system and method address a critical issue in the use of speech recognition during content playback, where echo cancellation is not good enough to deal with a poor signal-to-echo (SER) ratio. Specifically, the presently disclosed system and method facilitate distinguishing intended from unintended speech detections while minimizing the disruption of the main speech recognizer's functionality.

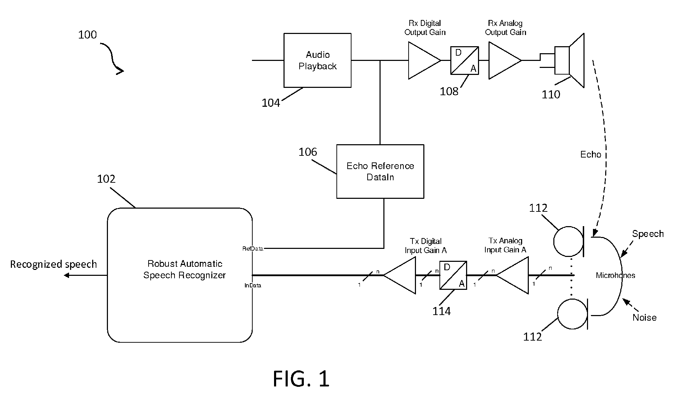

Fig. 1 shows an illustrative embodiment of an audio processing system 100. The system 100 comprises a robust automatic speech recognizer 102 which is configured to recognize speech in a digital signal. The robust automatic speech recognizer 102 is operatively coupled to an audio playback unit 104, from which it may receive echo reference input data 106. The echo reference input data 106 may facilitate the recognition of echo speech by the automatic speech recognizer 102. In a practical and efficient implementation, the echo reference input data corresponds to a digital loudspeaker signal transmitted from the audio playback unit 104 to a digital-to-analog converter 108, which may convert the signal and transmit it to a loudspeaker 110. Furthermore, the system 100 comprises microphones 112 that are configured to capture various types of sound, including echo produced by the loudspeaker 110, end-user speech and background noise. The microphones 112 may transmit a resulting analog audio input signal to an analog-to-digital converter 114, which may generate a digital representation of the signal and subsequently transmit it to the automatic speech recognizer 102.

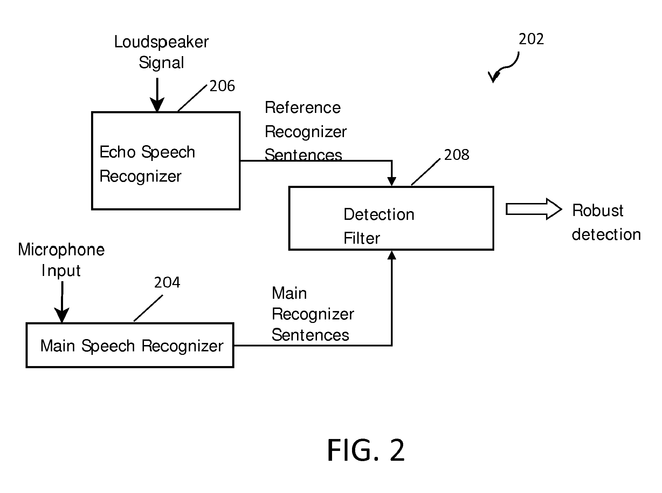

Fig. 2 shows an illustrative embodiment of a robust automatic speech recognizer 202. The automatic speech recognizer 202 comprises a main speech recognizer 204, an echo speech recognizer 206 and a filtering unit, i.e. detection filter 208. In operation, the main speech recognizer receives the digital signal which is representative of the microphone input. Furthermore, the echo speech recognizer 206 receives the echo reference input data 106 that may correspond to the aforementioned digital loudspeaker signal. Both speech recognizers 204, 206 may detect speech in the respective digital signals, for example in the form of detected sentences. Subsequently, these detected sentences may be provided to the detection filter 208. In a practical and efficient implementation, the detection filter 208 may compare these detected sentences and delete or suppress words which are substantially the same in both sentences. Note that a "sentence" is not necessarily a sentence in the grammatical sense, but it may be any sequence of words that can be detected by a speech recognizer. The detection filter 208 thus facilitates a robust detection of end-user speech. In one or more embodiments, said words comprise keywords that are configured to cause a device and/or an application to execute one or more functions. Thereby, the probability that the echo speech is erroneously used for activating a function may be further reduced.

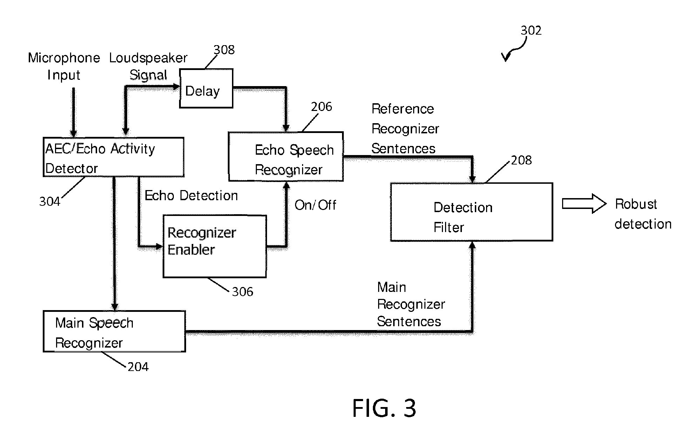

Fig. 3 shows a further illustrative embodiment of a robust automatic speech recognizer 302. In addition to the main speech recognizer 204, the echo speech recognizer 206 and the detection filter 208, the automatic speech recognizer 302 comprises, in this example, an AEC/echo activity detector 304, a recognizer enabler 306 and a delay function 308. As mentioned above, in one or more embodiments, the echo speech recognizer is configured to be activated conditionally, for example only if an echo has been detected. Thereby, it may be avoided that the echo speech recognizer is executed when it is not needed, thus reducing the power consumption and improving the performance of the system. In a practical and efficient implementation, the echo speech recognizer is configured to be activated in dependence on the output of an acoustic echo canceller 304 or on the output of an echo activity detector 304. In this example, the recognizer enabler 306 is configured to switch the echo speech recognizer on and off in dependence on the output of the acoustic echo canceller 304 or the echo activity detector 304 (i.e., an echo detection flag). In some embodiments, the acoustic echo canceller 304 comprises the echo activity detector 304. Alternatively or in addition, a separate echo activity detector 304 may be used.

Furthermore, in one or more embodiments, the system comprises a delaying unit that is configured to delay the echo reference input data before these data are received by the echo speech recognizer 206. The echo reference input data correspond to the loudspeaker signal. The delay accounts for the fact that the actual echo may be delayed compared to the echo reference input data, because it travels through the AD/DA converters 108, 114, the loudspeaker 110, the air and the microphones 112 (called the "echo path delay" when taken in combination), and for the fact that the AEC/echo activity detection process may also take some time. Accordingly, delaying the echo reference input data facilitates time-aligning the echo reference input data and the echo detection flag. Furthermore, in one or more embodiments, hysteresis is added to the output of the acoustic echo canceller or to the output of the echo activity detector, as the case may be. In this way, it may be avoided that the echo speech recognizer is switched off during a brief moment of silence in the loudspeaker signal; if the echo speech recognizer is switched off during brief moments of silence, the next detections might be wrong. The detection filter 208 may output one or more keywords, which may cause a device and/or an application to execute one or more functions, for example in a device that supports Automatic Speech Recognition (ASR). Alternatively, but without limitation, the detection filter 208 may output a set of words, for example in case of dictation.

The detection filter 208 may be implemented in the following ways, which are known per se and which should be regarded only as examples.
- Gating mechanism: when the echo speech recognizer has detected speech, ignore any detection from the main speech recognizer for a predefined time window. This solution is simple and easy to implement. However, it might cause the recognizer to reject valid detections occurring at the same time as the one on the echo signal, therefore increasing the amount of missed recognitions.
- Utterance-based mechanism: forward the detection of the main speech recognizer only if the detected utterance is different from the one detected by the echo speech recognizer. It is noted that the term "utterance" refers to a spoken word. Thus, as mentioned above, the detection filter may compare detected sentences and delete or suppress words which are substantially the same in both sentences. This results in a practical and efficient implementation, but it might still increase the missed recognitions slightly by rejecting valid utterances when the user says the same one as the one present in the echo signal.
- Timestamp-based approach: use information on detection timestamps to decide whether the main speech detection is valid, by taking the echo path delay into account.
- Phoneme-based approach: if available from the speech recognizer integrated in the system, use information on the detected phonemes and their timestamps, to decide whether the main speech detection is valid, by taking the echo path delay into account. Some speech recognizers have internal knowledge about the phonemes in the recorded audio; if this information is made available to the system, it may be used to improve the filtering mechanism. In practice this may be implemented as follows:
   - If the detected phonemes on the echo speech recognizer and on the main speech recognizer are the same, and if the timestamp of the phonemes on the main speech recognizer equals the timestamp on the echo speech recognizer plus the echo path delay, then the detection can be filtered.
   - If the detected phonemes on the echo speech recognizer and on the main speech recognizer are different, then the main speech recognizer sentences can be kept.
   - If the detected phonemes on the echo speech recognizer and on the main speech recognizer are the same, and if the timestamp of the phonemes on the main speech recognizer differs from the timestamp on the echo speech recognizer plus the echo path delay, then the detection can be kept.
- Semantic-based approach: use information on the semantics of the detected utterances and their timestamps, to decide whether some utterances are not valid.

Since timestamps may not be sample accurate, all these implementations may need a configurable time threshold to trade-off between rejection of false keywords in the echo speech, and missed detections in the user speech.

It is noted that the presently disclosed system may be embodied as an apparatus, for example as a chip. In that case, the apparatus may contain, in a practical and efficient implementation, a main speech recognizer circuit, an echo speech recognizer circuit, and a filtering circuit being configured to filter an output of the main speech recognizer circuit using an output of the echo speech recognizer circuit.

Furthermore, the systems and methods described herein may be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer-readable medium, which may include storage devices and signals, in compressed or uncompressed form.

As used herein, the term "mobile device" refers to any type of portable electronic device, including a cellular telephone, a Personal Digital Assistant (PDA), smartphone, tablet etc. Furthermore, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" or "processing unit" refers to a data processing circuit that may be a microprocessor, a co-processor, a microcontroller, a microcomputer, a central processing unit, a field programmable gate array (FPGA), a programmable logic circuit, and/or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium. More specific examples (non-exhaustive list) of the computer-readable medium may include the following: an electrical connection having one or more wires, a portable computer diskette, a random access memory (RAM), a read-only memory (ROM), an erasable programmable read-only memory (EPROM or Flash memory), an optical fiber, a portable compact disc read-only memory (CDROM), a digital versatile disc (DVD), a Blu-ray disc (BD), and a memory card.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE SIGNS

- 100: audio processing system
- 102: robust automatic speech recognizer
- 104: audio playback unit
- 106: echo reference input data
- 108: digital-to-analog converter
- 110: loudspeaker
- 112: microphone
- 114: analog-to-digital converter
- 202: robust automatic speech recognizer
- 204: main speech recognizer
- 206: echo speech recognizer
- 208: detection filter
- 302: robust automatic speech recognizer
- 304: AEC/echo activity detector
- 306: recognizer enabler
- 308: delay function

## Claims

1. A system for processing audio, comprising:
- a main speech recognizer;
- an echo speech recognizer;
- a filtering unit being configured to filter an output of the main speech recognizer using an output of the echo speech recognizer.

2. A system as claimed in claim 1, wherein the main speech recognizer is configured to receive an audio input signal from a microphone.

3. A system as claimed in claim 2, further comprising an acoustic echo canceller that is configured to suppress at least a part of the echo present in the audio input signal before said audio input signal is received by the main speech recognizer.

4. A system as claimed in any preceding claim, wherein the echo speech recognizer is configured to receive echo reference input data from an audio playback unit.

5. A system as claimed in claim 4, wherein the echo reference input data corresponds to a loudspeaker signal.

6. A system as claimed in claim 4 or 5, further comprising a delaying unit that is configured to delay the echo reference input data before said data are received by the echo speech recognizer.

7. A system as claimed in any preceding claim, wherein the filtering unit is configured to filter the output of the main speech recognizer by comparing it with the output of the echo speech recognizer and by deleting or suppressing words which are substantially the same in both outputs.

8. A system as claimed in claim 7, wherein said words comprise keywords that are configured to cause a device and/or an application to execute one or more functions.

9. A system as claimed in any preceding claim, wherein the echo speech recognizer is configured to be activated conditionally.

10. A system as claimed in claim 9, wherein the echo speech recognizer is configured to be activated in dependence on the output of an acoustic echo canceller or on the output of an echo activity detector.

11. A system as claimed in claim 10, wherein hysteresis is added to the output of the acoustic echo canceller or the output of the echo activity detector.

12. A system as claimed in any preceding claim, being embedded in at least one of:
a mobile device, a wearable device, a home appliance, a vehicle component.

13. A method for processing audio, wherein a filtering unit filters an output of a main speech recognizer using an output of an echo speech recognizer.

14. A computer program product comprising instructions which, when executed by a processing unit, cause said processing unit to carry out or control a method as claimed in claim 13.

15. An apparatus for processing audio, comprising:
- a main speech recognizer circuit;
- an echo speech recognizer circuit;
- a filtering circuit being configured to filter an output of the main speech recognizer circuit using an output of the echo speech recognizer circuit.
